# EUROPEAN PATENT APPLICATION

(11) **EP 3 336 645 A1**
(43) Date of publication of application: **20.06.2018**
(21) Application number: 17206596.3
(22) Date of filing: 12.12.2017
(51) Int. Cl.: G05D 1/00, B60T 8/175, G05D 1/02

(54) **AUTOMATED VEHICLE CONTROL WITH PAYLOAD COMPENSATION**

(30) Priority: 16.12.2016 US 201615381797
(71) Applicant: Delphi Technologies LLC, Troy, MI 48007 (US)
(72) Inventor: BEDEGI, Peter A., San Mateo, CA 94403 (US); KULKARNI, Divya P., Mountain View, CA 94043 (US)
(74) Representative: Robert, Vincent

(57) **Abstract**

A vehicle-control system (10) for an automated vehicle includes a load-sensor (18) and a controller (34). The load-sensor (18) is used to determine a weight (14) of a payload (16) transported by a host-vehicle (12). The controller (34) determines a response-characteristic (40) used to operate the host-vehicle (12), wherein the response-characteristic (40) is determined based on the weight (14) of the payload (16). The load-sensor (18) may be used to measure a ride- height (20) of the host-vehicle (12), estimate the weight (14) based on a test- acceleration (24) of the host-vehicle (12), or estimate the weight (14) based on a manifest (26) that indicates a package-weight (28) of a package transported by the host-vehicle (12).

## Description

### TECHNICAL FIELD OF INVENTION

This disclosure generally relates to a vehicle-control system for an automated vehicle, and more particularly relates to a system that determines a response-characteristic used to operate a host-vehicle, where the response-characteristic is determined based on a weight of a payload transported by the host-vehicle.

### BACKGROUND

It is known that the weight of a payload being transported (e.g. carried or towed) by a vehicle may affect response-characteristics such as the acceleration, cornering, and braking characteristics of the vehicle.

### SUMMARY

In accordance with one embodiment, a vehicle-control system for an automated vehicle is provided. The system includes a load-sensor and a controller in communication with the load-sensor. The load-sensor is used to determine a weight of a payload transported by a host-vehicle. The controller determines a response-characteristic used to operate the host-vehicle, wherein the response-characteristic is determined based on the weight of the payload.

The load-sensor may measure a ride-height of the host-vehicle and may estimate the weight based on the ride-height. The load-sensor may measure a test-acceleration of the host-vehicle and may estimate the weight based on the test-acceleration. The load-sensor may estimate the weight based on a manifest that indicate a package-weight of a package transported by the host-vehicle. The response-characteristic may include a braking-distance, and the braking-distance may be increased in accordance with the weight. The response-characteristic may include a cornering-speed, and the cornering-speed may be decreased in accordance with the weight. The response-characteristic may include an acceleration-rate, and the acceleration-rate may be decreased in accordance with the weight.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a vehicle-control system in accordance with one embodiment;
Fig. 2 is an illustration of a delivery-van equipped with the system of Fig. 1 in accordance with one embodiment; and
Fig. 3 is an illustration of automobile towing a trailer, where the automobile is equipped with the system of Fig. 1 in accordance with one embodiment.

### DETAILED DESCRIPTION

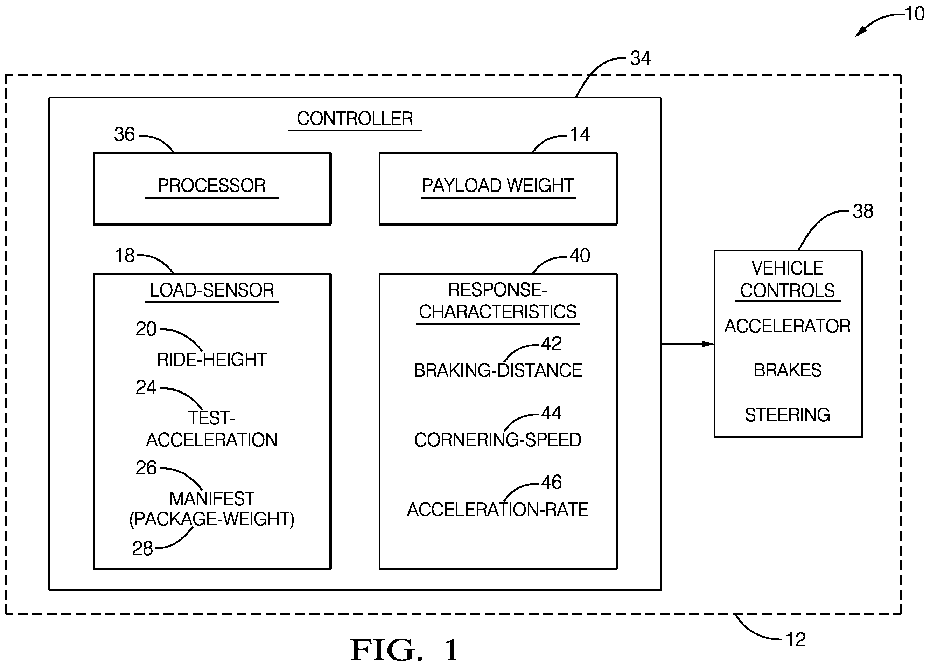

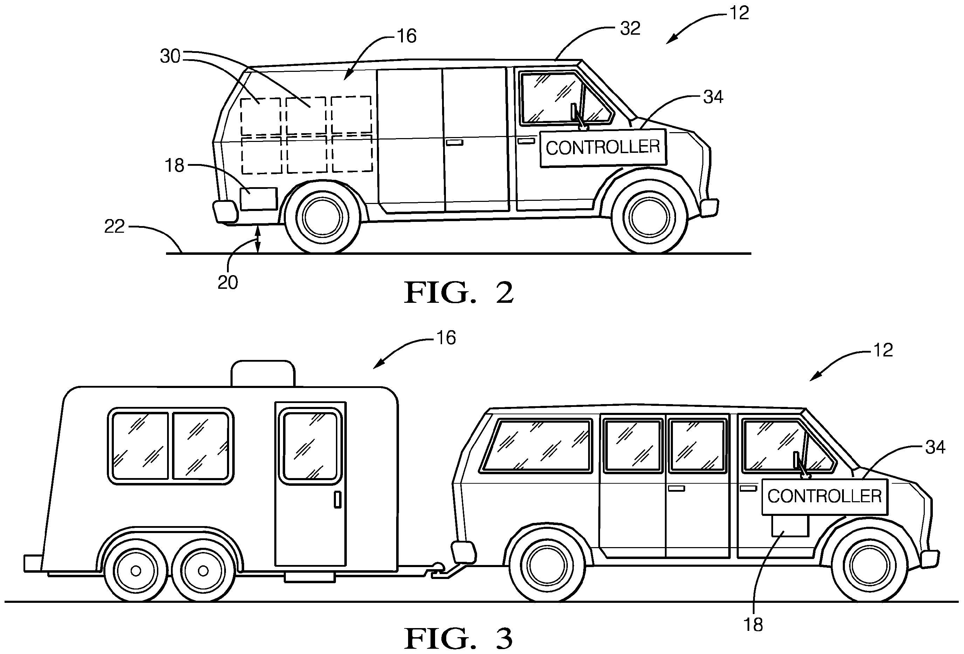

Fig. 1 illustrates a non-limiting example of a vehicle-control system 10, hereafter referred to as the system 10. The system 10 is generally configured for use in or by an automated vehicle, e.g. a host-vehicle 12. As used herein, the term automated vehicle may apply to instances when the host-vehicle 12 is being operated in an automated-mode, i.e. a fully autonomous mode, where a human-operator of the host-vehicle 12 may do little more than designate a destination in order to operate the host-vehicle 12. However, full automation is not a requirement. It is contemplated that the teachings presented herein are useful when the host-vehicle 12 is operated in a manual-mode where the degree or level of automation may be to merely adjust an automated braking system to compensate for weight 14 of a payload 16 (Figs. 2 and 3) or adjust a range-limit to a forward-vehicle, where violation of the range-limit triggers an audible and/or visual warning to the human-operator that the host-vehicle 12 is following too close behind (i.e. tail-gating) the forward-vehicle.

The system 10 includes a load-sensor 18 used to determine or estimate the weight 14 of the payload 16 transported within the host-vehicle 12 and-or towed by a host-vehicle 12. Once the weight 14 is known or estimated, that information is used by the system 10 to, by way of example and not limitation, compensate for, or anticipate for increased braking distance, slower acceleration, reduced cornering-speed, decreased fuel-economy, increased engine operating temperature, increased tire wear, and the like.

By way of example and not limitation, the load-sensor 18 may be configured to measure a ride-height 20 of the host-vehicle 12. By way of further non-limiting example, the load-sensor 18 may measure the amount of deflection of the suspension of the host-vehicle 12. Alternatively, the load-sensor 18 may be a short-range radar unit or an ultrasonic transducer used to measure the vertical distance from the load-sensor 18 to the roadway 22. Regardless of the method used, once the ride-height 20 is known, that value can be used to estimate the weight 14 of the payload 16 based on the ride-height 20.

By way of another non-limiting example, the load-sensor 18 may be configured to measure a test-acceleration 24 of the host-vehicle 12. That is, the weight may be determined indirectly based on the acceleration of the host-vehicle 12 during a known condition. The test-acceleration 24 may be the result of operating the engine of the host-vehicle 12 to a known throttle-position or power-level, and then measuring the acceleration. The acceleration may be measured using an accelerometer mounted on the host-vehicle, or may be determine by measuring the rate-of-change of speed indicated by, for example, a speedometer signal. It is contemplated that the value of the test-acceleration would need to be compensated for various conditions such as barometric pressure or altitude, ambient temperature, road-grade, (e.g. uphill vs. downhill), fuel-quality, and the like. It is also contemplated that baseline acceleration tests would be recorded frequently so an accurate performance profile of the host-vehicle 12 could be determined. Regardless of the method used, once the value of the test-acceleration 24 is known, that value can be used to estimate the weight 14 of the payload 16 based on the test-acceleration 24.

By way of another non-limiting example, the load-sensor 18 may be configured to estimate the weight 14 based on a manifest 26 of what is being transported by the host-vehicle 12, where the manifest 26 indicates a package-weight 28 of a package 30 (Fig. 2) transported by the host-vehicle 12. Referring to Fig. 2, a delivery-van 32 may be loaded with many packages 30 at a centralized loading facility (not shown), where typically the weight of each package is known. The manifest maybe manually entered into the system 10, or the system 10 may include a transceiver (not shown) that communicates with a computer at the loading facility to receive the manifest as the deliver-van 32 is being loaded. Then as the day progresses and each of the packages 30 is delivered to their individual destinations, the weight 14 of the payload 16 is reduced accordingly.

By way of another non-limiting example, the load-sensor 18 may be one or more instances of a weight-sensor (not specifically shown) located between the frame (not specifically shown) of the deliver-van 32 and the body or bed (not specifically shown) of the deliver-van 32 where packages are positioned for transportation. The operator may be required to make an entry into the system 10 when the delivery-van 32 is empty for calibration purposes. Accordingly, the weight 14 of the payload 16 may be determined based on the readings from the one or more weight-sensors.

The system 10 includes a controller 34 that may include a processor 36 such as a microprocessor or other control circuitry such as analog and/or digital control circuitry including an application specific integrated circuit (ASIC) for processing data as should be evident to those in the art. The controller 34 may include memory (not specifically shown), including non-volatile memory, such as electrically erasable programmable read-only memory (EEPROM) for storing one or more routines, thresholds, and captured data. The one or more routines may be executed by the processor 36 to perform steps for determining the weight 14 of the payload 16 based on signals received by the controller 34 from the load-sensor 18, and optionally other sensors, as described herein. The controller 34 may include vehicle-controls 38, or be in communication with the vehicle-controls 38 of the host-vehicle 12 so the controller 34 can operate one or more of the accelerator, the brakes, and/or the steering to the host-vehicle 12. The means for the controller 34 to operate the accelerator, the brakes, and/or the steering to the host-vehicle 12 are known.

The controller 34 is generally configured to determine a response-characteristic 40 used to operate the host-vehicle 12, where the response-characteristic 40 is determined based on the weight 14 of the payload 16. As used herein, the response-characteristic 40 may alternatively be called a dynamic-model of the host-vehicle 12. In general, the response-characteristic 40 indicates how the host-vehicle 12 will or is expected to respond when subjected to various operating conditions.

By way of example and not limitation, the response-characteristic 42 may include a braking-distance 42, where the braking-distance 42 is increased as the weight 14 of the payload 16 increases. That is, as the weight 14 increases, the expected value of the braking-distance 42 is adjusted accordingly. It is contemplated that the braking-distance 42 may be further compensated for various conditions such as speed of the host-vehicle 12, temperature, road-grade (uphill vs. downhill), weather (wet vs. dry roadways), and the like.

By way of another non-limiting example, the response-characteristic 40 may include a cornering-speed 44, which may be more accurately described as a maximum safe cornering speed. The cornering-speed 44 is generally decreased as the weight 14 of the payload 16 increases. The cornering-speed 44 may also be compensated or adjusted based on, for example, the radius of the corner or curve, weather conditions, the bank-angle of the curve, recommend speed-limit for the curve and the like.

By way of another non-limiting example, the response-characteristic may include an acceleration-rate 46 (i.e. an expected value for acceleration) of the host-vehicle 12, which adjusted in accordance with the weight 14. When the host-vehicle 12 is traveling on level-ground or traveling up-hill, the acceleration-rate 46 will be decreased as the weight 14 increases. However, if the roadway is a steep downhill, the acceleration-rate 46 may be increased as the weight 14 increases. Having knowledge of the expected or projected acceleration capability of the host-vehicle 12 is useful when the host-vehicle is operating in a fully automated mode and the host-vehicle 12 is about to turn onto a roadway where traffic is present. That is, the controller 34 may be configured to avoid or minimize interference with traffic already on the roadway, so the decision of whether or not to enter the roadway is determine based on, at least in part, the acceleration-rate 46.

Accordingly, a vehicle-control system for an automated vehicle (the system 10), a controller 34 for the system 10, and a method of operating the system 10 is provided. The system 10 changes or compensates for the effect of the weight 14 on the dynamic behavior characteristics of the host-vehicle 12.

While this invention has been described in terms of the preferred embodiments thereof, it is not intended to be so limited, but rather only to the extent set forth in the claims that follow.

## Claims

1. A vehicle-control system (10) for an automated vehicle, said system (10) comprising:
a load-sensor (18) used to determine a weight (14) of a payload (16) transported by a host-vehicle (12);
a controller (34) in communication with the load-sensor (18), said controller (34) determines a response-characteristic (40) used to operate the host-vehicle (12), wherein the response-characteristic (40) is determined based on the weight (14) of the payload (16).

2. The system (10) in accordance with claim 1, wherein the load-sensor (18) measures a ride-height (20) of the host-vehicle (12) and estimates the weight (14) based on the ride-height (20).

3. The system (10) according to any one of the preceding claims, wherein the load-sensor (18) measures a test-acceleration (24) of the host-vehicle (12) and estimates the weight (14) based on the test-acceleration (24).

4. The system (10) according to any one of the preceding claims, wherein the load-sensor (18) estimates the weight (14) based on a manifest (26) that indicates a package-weight (28) of a package (30) transported by the host-vehicle (12).

5. The system (10) according to any one of the preceding claims, wherein the response-characteristic (40) includes a braking-distance (42), and the braking-distance (42) is increased in accordance with the weight (14).

6. The system (10) according to any one of the preceding claims, wherein the response-characteristic (40) includes a cornering-speed (44), and the cornering-speed (44) is decreased in accordance with the weight (14).

7. The system (10) according to any one of the preceding claims, wherein the response-characteristic (40) includes an acceleration-rate (46), and the acceleration-rate (46) is decreased in accordance with the weight (14).
